(19) **Europäisches Patentamt / European Patent Office / Office européen des brevets**

(11) **EP 4 411 316 A1**

(12) **EUROPEAN PATENT APPLICATION**
published in accordance with Art. 153(4) EPC

(43) Date of publication:
**07.08.2024 Bulletin 2024/32**

(21) Application number: **22945434.3**

(22) Date of filing: **04.07.2022**

(51) International Patent Classification (IPC):
**G01B 11/16** (2006.01)       **G01B 11/02** (2006.01)
**G01B 11/26** (2006.01)

(52) Cooperative Patent Classification (CPC):
**G01B 11/02; G01B 11/16; G01B 11/26**

(86) International application number:
**PCT/CN2022/103733**

(87) International publication number:
**WO 2023/236298 (14.12.2023 Gazette 2023/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.06.2022 CN 202210653048**

(71) Applicant: **Beijing Information Science and Technology University**
**Beijing 100192 (CN)**

(72) Inventors:
• **WU, Sijin**
  **Beijing 100192 (CN)**
• **SHI, Lili**
  **Beijing 100192 (CN)**
• **DONG, Mingli**
  **Beijing 100192 (CN)**
• **LI, Weixian**
  **Beijing 100192 (CN)**

(74) Representative: **Hoefer & Partner Patentanwälte mbB**
**Pilgersheimer Straße 20**
**81543 München (DE)**

(54) **SIX-DEGREES-OF-FREEDOM DISPLACEMENT MEASUREMENT METHOD AND APPARATUS**

(57) This disclosure relates to a six-degree-of-freedom displacements measurement method and device, which includes measuring three phase maps caused by geometric motion and/or deformation of the measured object based on three-dimensional digital speckle pattern interferometry; Based on the three phase maps, determine the six-degree-of-freedom displacements of the measured object, wherein the six-degree-of-freedom displacements include three linear displacements and three angular displacements. According to the disclosed embodiment, it is possible to effectively achieve cooperative-target-free measurement of the measured object, and the measurement accuracy of the measured six-degree-of-freedom displacements is relatively high.

```
┌─────────────────────────────────────────────────────────────┐
│  Based on the three-dimensional digital speckle pattern       │
│  interferometry, measure the three phase maps caused by       │── S11
│  the geometric motions and/or deformations of the             │
│  measured object                                              │
└─────────────────────────────────────────────────────────────┘
                              │
                              ▼
┌─────────────────────────────────────────────────────────────┐
│  Based on the three phase maps, determine the                 │
│  six-degree-of-freedom displacements of the measured          │── S12
│  object, where the six-degree-of-freedom displacements        │
│  includes three linear displacements and three angular        │
│  displacements                                                │
└─────────────────────────────────────────────────────────────┘
```

Figure 1

EP 4 411 316 A1

**Description**

**Technical field**

This disclosure relates to the field of full-field optical measurement technology, in particular to a six-degree-of-freedom displacements measurement method and device.

**Background technology**

In the manufacturing industry, the research on six-degree-of-freedom displacements measurement methods for components and structures has significant engineering significance. It has important applications in pose detection, precision machining, accuracy evaluation, deformation measurement, and other fields. For example, in precision machine tools, the six-degree-of-freedom motion errors of its moving parts need to be regularly measured to compensate for errors and improve the machining accuracy of the machine tool. In the aerospace field, thermal deformation of structures can cause six-degrees-of-freedom displacements on their end faces, leading to structural failure or a decrease in control accuracy. The commonly used six-degree-of-freedom displacements optical measurement methods in related technologies include interferometry, collimation, and a combination of collimation and interferometry. These methods all require the installation of a cooperative target lens on the tested object. If the tested object is very small, such as if it is a microelectromechanical system, it will be impossible to fix the target lens on the tested object; In addition, the target mirror may introduce additional installation errors, or the weight of the target mirror may affect the motion state of the tested component, resulting in a decrease in the accuracy of six-degree-of-freedom displacement measurement; In some cases, the elastic deformation of the end face can also cause unexpected displacement of the target mirror, leading to significant measurement errors.

**Contents of the invention**

In view of this, this disclosure proposes a six-degree-of-freedom displacements measurement method and device to achieve high-precision measurement of six-degree-of-freedom displacements.

According to one aspect of the present disclosure, a six-degree-of-freedom displacements measurement method is provided, comprising: based on the three-dimensional digital speckle pattern interferometry, obtaining the three phase maps caused by the geometric motions and/or deformations of the measured object; Based on the three phase maps, determine the six-degree-of-freedom displacements of the measured object, wherein the six-degree-of-freedom displacements include three linear displacements and three angular displacements.

In one possible implementation, the six-degree-of-freedom displacements of the measured object are determined based on the three phase maps, including: determining the spatial gradient corresponding to each phase map; Determining the three angular displacements based on the spatial gradient corresponding to each phase map.

In one possible implementation, the three angular displacements are determined based on the spatial gradient corresponding to each phase map, including: determining at least two first feature points in each phase map; Determining the three angular displacements based on the two first feature points determined in each phase map, as well as the spatial gradient and distribution characteristics corresponding to each phase map.

In one possible implementation, the six-degree-of-freedom displacements of the measured object are determined based on the three phase maps, including: determining at least one second feature point in each phase map; determining the three linear displacements based on the second feature point determined in each phase map, the three angular displacements, and the three phase maps.

In one possible implementation, for any phase map, the distance between different first feature points determined in the phase map is greater than the first distance threshold; And/or, for any phase map, the distance between different second feature points determined in the phase map is greater than the second distance threshold.

According to another aspect of the present disclosure, a six-degree-of-freedom displacements measurement device is provided, comprising a phase measurement module for measuring the three phase maps caused by the geometric motions and/or deformations of the measured object based on the three-dimensional digital speckle pattern interferometry; a six-degree-of-freedom displacements measurement module is used to determine the six-degree-of-freedom displacements of the measured object based on the three phase maps, wherein the six-degree-of-freedom displacements include three linear displacements and three angular displacements.

In one possible implementation, the six-degree-of-freedom displacements measurement module comprises: a spatial gradient determination submodule for determining the spatial gradient corresponding to each phase map; an angular displacement measurement submodule is used to determine the three angular displacements based on the spatial gradient corresponding to each phase map.

In one possible implementation, the angular displacement measurement submodule is specifically used to:

determine at least two first feature points in each phase map; Determine the three angular displacements based on the two first feature points determined in each phase map, as well as the spatial gradient and distribution characteristics corresponding to each phase map.

In one possible implementation, the six-degree-of-freedom displacements measurement module comprises a linear displacement measurement submodule, specifically for determining at least one second feature point in each phase map; determining the three linear displacements based on the second feature point determined in each phase map, three angular displacements, and three phase maps.

In one possible implementation, for any phase map, the distance between different first feature points determined in the phase map is greater than the first distance threshold; And/or, for any phase map, the distance between different second feature points determined in the phase map is greater than the second distance threshold.

Based on the three-dimensional digital speckle pattern interferometry, three phase maps are measured to determine the six-degree-of-freedom displacements of the measured object caused by its geometric motions and/or displacements. The six - degree-of-freedom displacements include three linear displacements and three angular displacements. In this way, based on the three-dimensional digital speckle pattern interferometry, it is possible to effectively achieve cooperative-target-mirror-free measurement of the measured object, and the measurement accuracy of the six-degrees-of-freedom is relatively high.

Based on the detailed explanation of exemplary embodiments with reference to the accompanying drawings below, other features and aspects disclosed herein will become clear.

**Illustration**

The accompanying drawings included in and forming part of the specification together with the specification illustrate exemplary embodiments, features, and aspects of the present disclosure, and are used to explain the principles of the present disclosure.

Figure 1 shows a flowchart of the six-degree-of-freedom displacement measurement method according to the disclosed embodiment;

Figure 2 shows a schematic diagram of a three-dimensional spatial-carrier digital speckle pattern interferometric optical setup of the present disclosed embodiment;

Figure 3 shows a structural diagram of a three-dimensional spatial-carrier digital speckle pattern interferometric optical setup of the present disclosed embodiment;

Figure 4 shows a schematic diagram of the six-degree-of-freedom displacements of the tested object in the present disclosed embodiment;

Figure 5 illustrates a schematic diagram of a spatial distribution of the three lasers in Figure 2/ Figure 3 of the present disclosed embodiment;

Figure 6 shows the optical path geometric model of the digital speckle pattern interferometry for measuring the geometric motions of a rigid body in the disclosed embodiment;

Figure 7 shows a schematic diagram of another spatial distribution of the three lasers in Figure 2/ Figure 3 of the present disclosed embodiment;

Figure 8 shows a block diagram of a six-degree-of-freedom displacements measurement device of the present disclosed embodiment.

**Specific implementation methods**

The following will refer to the accompanying drawings to provide a detailed explanation of various exemplary embodiments, features, and aspects disclosed herein. The same accompanying symbols in the drawings indicate components with the same or similar functions. Although various aspects of the embodiments are shown in the accompanying drawings, it is not necessary to draw the drawings to scale unless otherwise specified.

The specialized word "illustrative" here means "used as an example, embodiment, or illustration". Any embodiments described here as "exemplary" need not be interpreted as superior or superior to other embodiments

In addition, in order to better illustrate this disclosure, numerous specific details are provided in the following specific implementation methods. Technicians in this field should understand that without certain specific details, this disclosure can also be implemented. In some examples, methods, means, components, and circuits familiar to those skilled in the art are not described in detail to highlight the main purpose of this disclosure.

Digital speckle pattern interferometry is a full-field optical measurement technique with high accuracy, non-contact, wide applicability, simple optical structure, and full-field measurement characteristics. It can be applied to measure the contour, deformation, strain, vibration changes, etc. of obj ects. Digital speckle pattern interferometry is sensitive to both small angular and linear displacements. Therefore, we propose a method based on the digital speckle pattern interferometry to simultaneously measure the six-degrees-of-freedom motions of a rigid body. Unlike the six-degree-of-freedom motions measurement method in related technologies, based on the six-degree-of-freedom displacements measurement method provided in this disclosed embodiment, it can achieve cooperative-target-mirror-free measurement of the measured object, with a wide range of applications and high measurement accuracy.

Below is a detailed description of the six-degree-of-freedom displacements measurement method provided in this disclosed embodiment.

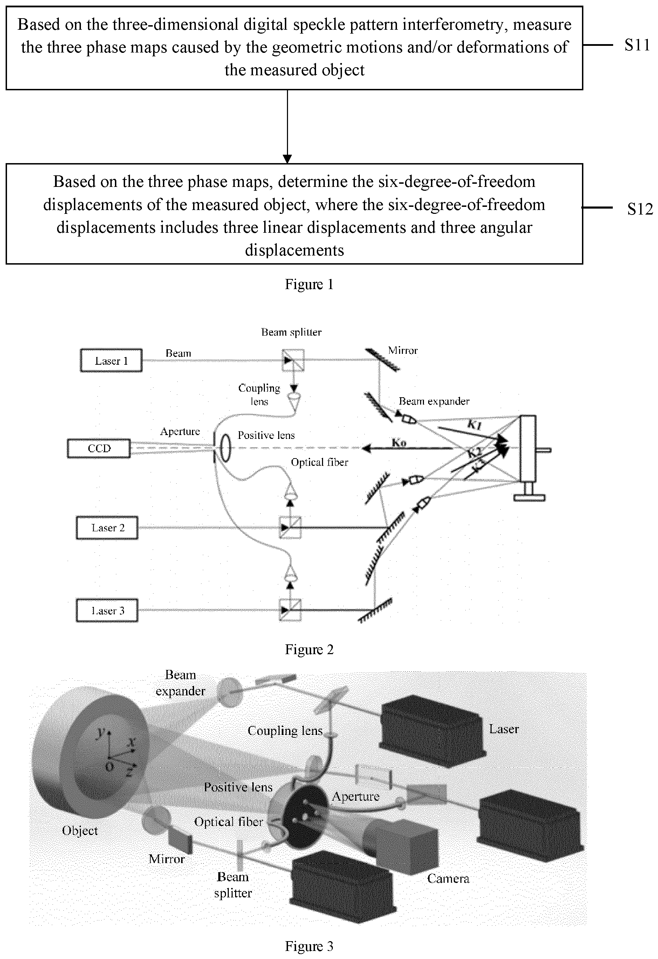

Figure 1 shows a flowchart of the six-degree-of-freedom displacements measurement method according to the disclosed embodiment. As shown in Figure 1, the method may include:

In step S11, based on the three-dimensional digital speckle pattern interferometry, three phase maps caused by the geometric motions and/or deformations of the measured object are measured.
In step S12, based on the three phase maps, determine the six-degree-of-freedom displacements of the measured object, where the six-degree -of-freedom displacements include three linear displacements and three angular displacements.

By utilizing the six-degree-of-freedom displacements measurement method in this disclosed embodiment, based on the three-dimensional digital speckle pattern interferometry, it is possible to effectively achieve cooperative-target-mirror-free measurement of the measured object, and the accuracy of the six-degree-of-freedom displacements measurement is relatively high.

In example 1, the three-dimensional digital speckle pattern interferometry can be a three-dimensional spatial-carrier digital speckle pattern interferometry, or other types of three-dimensional digital speckle pattern interferometry, which is not specifically limited by this disclosure.

The following is a detailed description of the specific process of six-degree-of-freedom displacements measurement using three-dimensional spatial-carrier digital speckle interferometry technology as an example.

Figure 2 shows a schematic diagram of a three-dimensional spatial-carrier digital speckle pattern interferometry optical setup according to the disclosed embodiment. Figure 3 shows a structural diagram of a three-dimensional spatial-carrier digital speckle pattern interferometry optical setup of the present disclosed embodiment. As shown in Figures 2 and 3, the optical setup is divided into three parts, each with the same structure.

Taking one of the three parts corresponding to laser 1 as an example, a laser beam emitted by laser 1 is divided into object and reference beams through a splitter. After passing through a reflector and a beam expander, the object light is irradiated on the surface of the measured object, forming a speckle field that is imaged through an imaging lens (such as a convex lens) used for focusing, and then captured by an image sensor (such as a CCD). A circular aperture is placed between the imaging lens and the image sensor to adjust the intensity of the object light passing through and limit its spatial frequency.

The reference light is directly irradiated into the image sensor through a single-mode optical fiber to introduce a carrier wave. By adjusting the incident angle of the reference light, the position of the carrier spectrum can be adjusted. By determining an appropriate reference light incidence angle, the spectra can be separated.

In addition, interference occurs only when the object beam and reference beam come from the same laser, and there is no interference between beams from different lasers. Therefore, three interference fields generated by the three parts of the optical setup will be formed on the surface of the image sensor, which will be recorded, collected, and stored by the image sensor for further processing.

Using the three-dimensional spatial-carrier digital speckle pattern interferometric optical setup shown in Figures 2 and 3, the three interference fields of the measured object before and after geometric motion are collected, and then the three phase maps caused by the geometric motion of the measured object are measured. Among them, for any phase map, it reflects the phase difference of the measured object before and after geometric motion

Based on the measurement principle of digital speckle pattern interferometry, the relationship between the phase difference and the displacement of the measured object caused by geometric motion can be shown in the following equation:

$$\Delta\phi\left(x,y\right)=\frac{2\pi}{\lambda}\vec{d}\left(x,y\right)\vec{s}\left(x,y\right), \qquad (1)$$

where $\Delta\phi(x,y)$ represents the phase difference, $\vec{d}(x,y)$ represents the displacement vector, $\vec{s}(x,y)$ represents the displacement sensitivity coefficient vector, and 2 represents the wavelength corresponding to the laser. When the displacement sensitivity coefficient vector and wavelength are known, the displacement vector can be determined based on phase difference using equation (1).

When the size of the measured object is much smaller than the distance between the measured object and the image sensor, the relationship between the phase difference and displacement of the three-dimensional spatial-carrier digital speckle pattern interferometry optical setup is shown in the following equation:

$$\Delta\phi_n = \frac{2\pi}{\lambda_n}\left[u\sin\alpha_n + v\cos\beta_n + w\left(1+\sin\gamma_n\right)\right], \text{n=1,2,3} \qquad (2)$$

where $\Delta\phi_n$ represents the phase difference generated by the three beams of light at different irradiation angles, $\lambda_n$ represents the wavelength of the three lasers, $\alpha_n$, $\beta_n$, $\gamma_n$ represent the angles at which the beams of light illuminate the measured object in the directions of $x$, $y$ and $z$ respectively, and $u$, $v$, and $w$ represent two in-plane displacements and one out-of-plane displacement of the measured object, respectively.

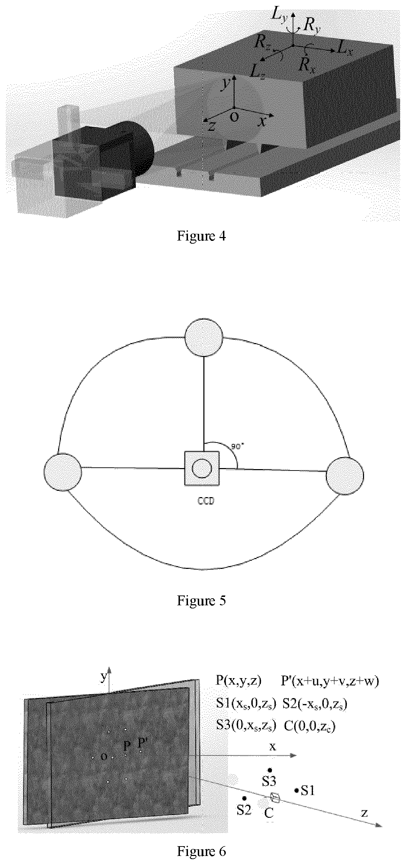

Figure 4 shows a schematic diagram of the six-degree-of-freedom displacements of the tested object in the present disclosed embodiment. As shown in Figure 4, the linear displacements along the three axes are $L_x$, $L_y$ and $L_z$, and the angular displacements around the three axes are $R_x$, $R_y$ and $R_z$. In the measurement system for measuring the six-degrees-of-freedom displacements of the measured object, the digital speckle pattern interferometry measurement system is placed in front of the end face of the measured object along the z-axis, and the three laser beams are incident at a small angle in the shape of a "品"on the end face of the measured axis.

Figure 5 shows a schematic diagram of a spatial distribution of the three lasers in Figures 2/3 of the present disclosed embodiment. As shown in Figure 5, the three lasers are distributed in the shape of a "品". Under the spatial distribution of the three lasers shown in Figure 5, Figure 6 shows the optical path geometric model of the digital speckle pattern interferometry for measuring the geometric motion of a rigid body in the disclosed embodiment. As shown in Figure 6, the image sensor is located on the z-axis, and the three lasers with the same wavelength, S1, S2, and S3, are irradiated on the end face of the measured axis in a zigzag shape at the same angle. Each laser interferes with its own reference light at the camera, forming three independent speckle interference signals. Based on the calculation described by equation (2), the relationship between the three phase differences and displacement corresponding to the three speckle interference signals can be described by:

$$\begin{cases} \Delta\phi_{S1} = \dfrac{2\pi}{\lambda}\left[u\sin\alpha + w\left(1+\cos\alpha\right)\right] \\[2mm] \Delta\phi_{S2} = \dfrac{2\pi}{\lambda}\left[u\sin\left(-\alpha\right) + w\left(1+\cos\alpha\right)\right], \\[2mm] \Delta\phi_{S3} = \dfrac{2\pi}{\lambda}\left[v\sin\alpha + w\left(1+\cos\alpha\right)\right] \end{cases} \qquad (3)$$

where $\alpha$ is the illumination angle.

When the end face of the measured axis undergoes rigid geometric motions, it will cause a change in the optical path of the three object beams, while the optical path of the reference light remains unchanged, resulting in a change in the optical path difference of the interference and a regular change in the corresponding interference phase. By understanding the relationship between the phase changes of the three-way interference and the geometric motions of the rigid body, a six-degree-of-freedom displacements measurement model can be established.

When the end face of the measured object undergoes displacement, the coordinates of any point P on the end face change from ($x,y,z$) to ($x+u,y+v,z+w$). The displacements ($u,v,w$) are caused by the corresponding geometric motions, where $u$ is generated by $L_x$, $R_y$, and $R_z$, $v$ is generated by $L_y$, $R_x$, and $R_z$, $w$ is generated by $L_z$, $R_x$ , and $R_y$. They can be expressed as by

$$u = L_x - x\left(1-\cos R_y\right) + \sqrt{x^2+y^2}\left[\cos\left(\arctan\frac{y}{x}+R_z\right) - \cos\left(\arctan\frac{y}{x}\right)\right], \qquad (4)$$

$$v = L_y - y\left(1-\cos R_x\right) + \sqrt{x^2+y^2}\left[\sin\left(\arctan\frac{y}{x}+R_z\right) - \sin\left(\arctan\frac{y}{x}\right)\right], \qquad (5)$$

$$w = L_z + \sqrt{y^2 + z^2}\left[\sin\left(\arctan\frac{z}{y} + R_x\right) - \sin\left(\arctan\frac{z}{y}\right)\right]$$
$$+ \sqrt{x^2 + z^2}\left[\sin\left(\arctan\frac{z}{x} - R_y\right) - \sin\left(\arctan\frac{z}{x}\right)\right] \quad (6)$$

Considering that the displacement under high-precision measurement conditions is much smaller than the size of the object, the higher-order terms of the degree-of-freedom errors in equations (4) - (6) can be ignored. Therefore, equations (4) - (6) can be simplified as:

$$\begin{pmatrix} u \\ v \\ w \end{pmatrix} = \begin{pmatrix} L_x - yR_z \\ L_y + xR_z \\ L_z + yR_x - xR_y \end{pmatrix}. \quad (7)$$

The geometric model shown in Figure 6 essentially consists of three independent and symmetrical single beam illumination digital speckle pattern interferometry optical paths, each of which is sensitive to an out-of-plane displacement component and an in-plane displacement component. Taking into account the results of equations (3) and (7), the phase difference output by the three-way interference can be expressed as:

$$\begin{pmatrix} \Delta\phi_{S1} \\ \Delta\phi_{S2} \\ \Delta\phi_{S3} \end{pmatrix} = \frac{2\pi}{\lambda}\begin{pmatrix} L_x \sin\alpha + L_z(1+\cos\alpha) + yR_x(1+\cos\alpha) - xR_y(1+\cos\alpha) - yR_z\sin\alpha \\ -L_x\sin\alpha + L_z(1+\cos\alpha) + yR_x(1+\cos\alpha) - xR_y(1+\cos\alpha) + yR_z\sin\alpha \\ L_y\sin\alpha + L_z(1+\cos\alpha) + yR_x(1+\cos\alpha) - xR_y(1+\cos\alpha) + xR_z\sin\alpha \end{pmatrix},$$

$$(8)$$

From equation (8), it can be seen that the phase difference of each interference is related to five geometric displacements, including two linear displacements and three angular displacements. When the illumination of the interference light path is located in the *xoz* plane, except $L_y$ that the interference light setup is sensitive to the other five geometric displacements; When the illumination of the interference light path is located in the *yoz* plane, except $L_x$ that the interference light setup is sensitive to the other five geometric displacements. When there is one or more geometric displacements, interference phase of multiple optical paths will change accordingly, indicating the reason why digital speckle pattern interferometry is sensitive to multi-degree-of-freedom displacements.

In one possible implementation, based on the three phase maps, determine the six-degrees-of-freedom displacements of the measured object, including: determining the spatial gradient corresponding to each phase map; determining the three angular displacements based on the spatial gradient corresponding to each phase map.

Taking the above as an example, and the derivative of the three interference phase differences in equation (8) over x and y as the geometric displacement belongs to rigid body displacement, its spatial gradient is 0. Therefore, the spatial gradient of the three interference phase differences along the x and y directions can be expressed:

$$\begin{pmatrix} \dfrac{\partial\Delta\phi_{S1}}{\partial x} & \dfrac{\partial\Delta\phi_{S1}}{\partial y} \\[2mm] \dfrac{\partial\Delta\phi_{S2}}{\partial x} & \dfrac{\partial\Delta\phi_{S2}}{\partial y} \\[2mm] \dfrac{\partial\Delta\phi_{S3}}{\partial x} & \dfrac{\partial\Delta\phi_{S3}}{\partial y} \end{pmatrix} = \frac{2\pi}{\lambda}\begin{pmatrix} -R_y(1+\cos\alpha) & R_x(1+\cos\alpha) - R_z\sin\alpha \\ -R_y(1+\cos\alpha) & R_x(1+\cos\alpha) + R_z\sin\alpha \\ -R_y(1+\cos\alpha) + R_z\sin\alpha & R_x(1+\cos\alpha) \end{pmatrix} \quad (9).$$

Equation (9) reveals that the spatial gradient of the phase of each digital speckle pattern interferometry is only related to one or two angular displacements, and the generation of spatial fringes in the phase map is only caused by the corresponding angular displacements. Due to the independence of angular displacement from spatial distribution, at a certain moment, the spatial gradient of the phase is the same throughout the field, that is, the phase fringes vary uniformly with equal spacing, but the spacing between fringes depends on the amount of angular displacement between two samples.

Equation (9) also suggests that the measurement principle of angular displacements can be explored by starting from the spatial distribution of digital speckle pattern interferometric phase.

In one possible implementation, the three angular displacements are determined based on the spatial gradient corresponding to each phase map, including: determining at least two first feature points in each phase map; based on the two first feature points determined in each phase map, as well as the spatial gradient and distribution characteristics corresponding to each phase map, determine the three angular displacements.

Taking the above as an example, solving equation (9) can obtain the three angular displacements, as :

$$
\begin{cases}
R_x = \dfrac{\lambda}{2\pi(1+\cos\alpha)} \cdot \dfrac{\partial\Delta\phi_{S3}}{\partial y} \\[2ex]
R_y = \dfrac{\lambda}{2\pi(1+\cos\alpha)} \cdot \dfrac{\partial\Delta\phi_{S1}}{\partial x} \\[2ex]
R_z = \dfrac{\lambda}{4\pi\sin\alpha}\left(\dfrac{\partial\Delta\phi_{S2}}{\partial y} - \dfrac{\partial\Delta\phi_{S1}}{\partial y}\right)
\end{cases}
. \qquad (10)
$$

Considering that the spatial distribution of phase is uniformly changing, at least two first feature points can be determined in each phase map. Differential operation can be used instead of differential operation, and the three angular displacements can be expressed as:

$$
\begin{pmatrix} R_x \\ R_y \\ R_z \end{pmatrix} = \frac{\lambda}{2\pi}
\begin{pmatrix}
\dfrac{\Delta\phi_{S3}(x_1,y_1) - \Delta\phi_{S3}(x_2,y_2)}{(1+\cos\alpha)(y_1-y_2)} \\[2ex]
\dfrac{\Delta\phi_{S1}(x_3,y_3) - \Delta\phi_{S1}(x_4,y_4)}{(1+\cos\alpha)(x_3-x_4)} \\[2ex]
\dfrac{\Delta\phi_{S2}(x_5,y_5) - \Delta\phi_{S2}(x_6,y_6) - \Delta\phi_{S1}(x_5,y_5) + \Delta\phi_{S1}(x_6,y_6)}{2\sin\alpha(y_5-y_6)}
\end{pmatrix}, \qquad (11)
$$

where A $(x_1,y_1)$ and B$(x_2,y_2)$ are the two first feature points in the phase map $\Delta\phi_{S3}$; C$(x_3,y_3)$ and D$(x_4,y_4)$ are the two first feature points in the phase map $\Delta\phi_{S1}$; E $(x_5,y_5)$ and F$(x_6,y_6)$ are the two first feature points in the phase map $\Delta\phi_{S2}$ ; G $(x_5,y_5)$ and H $(x_6,y_6)$ are the two first feature points in the phase map $\Delta\phi_{S1}$.

E$(x_5,y_5)$, F$(x_6,y_6)$ and G$(x_5,y_5)$, H$(x_6,y_6)$ have the same coordinate values, that is, E$(x_5,y_5)$ and F$(x_6,y_6)$ have the same relative positions in the phase map $\Delta\phi_{S2}$ asG$(x_5,y_5)$ and H$(x_6,y_6)$ in the phase map $\Delta\phi_{S1}$.

C$(x_3,y_3)$, D$(x_4,y_4)$, G$(x_5,y_5)$, and H$(x_6,y_6)$ can be the same two first feature points in the phase map $\Delta\phi_{S1}$, or they can be different first feature points. This disclosure does not provide specific limitations on this.

In one possible implementation, the six-degree-of-freedom displacements of the measured object are determined based on the three phase changes, including: determining at least one second feature point in each phase map; based on the second feature point determined in each phase map, the three angular displacements, and the three phase maps, determine the three linear displacements.

At least one second feature point is determined in each phase map. Based on the three angular displacements shown in equation (11), combined with equations (11) and (8), the three linear displacements can be expressed as:

$$\begin{pmatrix} L_x \\ L_y \\ L_z \end{pmatrix} = \begin{pmatrix} \dfrac{\lambda\left[\Delta\phi_{S1}(x_7,y_7)-\Delta\phi_{S2}(x_7,y_7)\right]}{4\pi\sin\alpha}+y_7 R_z \\ \dfrac{\lambda\left[2\Delta\phi_{S3}(x_8,y_8)-\Delta\phi_{S1}(x_8,y_8)-\Delta\phi_{S2}(x_8,y_8)\right]}{4\pi\sin\alpha}-x_8 R_z \\ \dfrac{\lambda\left[\Delta\phi_{S1}(x_9,y_9)+\Delta\phi_{S2}(x_9,y_9)\right]}{4\pi(1+\cos\alpha)}-y_9 R_x+x_9 R_y \end{pmatrix}, \qquad (12)$$

where I($x_7,y_7$) is a second feature point in the phase map $\Delta\phi_{S1}$, and J ($x_7,y_7$) is a second feature point in the phase map $\Delta\phi_{S2}$. I($x_7,y_7$) and J ($x_7,y_7$) have the same coordinate value, that is, I($x_7,y_7$) and J($x_7,y_7$) have the same relative position in the phase map $\Delta\phi_{S1}$ and $\Delta\phi_{S2}$.

K($x_8,y_8$) is a second feature point in the phase map $\Delta\phi_{S3}$, L($x_8,y_8$) is a second feature point in the phase map $\Delta\phi_{S1}$, and M($x_8,y_8$) is a second feature point in the phase map $\Delta\phi_{S2}$. K($x_8,y_8$), L($x_8,y_8$), and M($x_8,y_8$) have the same coordinate values, that is, K($x_8,y_8$) has the same relative position in the phase map $\Delta\phi_{S3}$ as L ($x_8,y_8$), and M($x_8,y_8$) has the same relative position in the phase map $\Delta\phi_{S1}$ and $\Delta\phi_{S2}$.

N($x_9,y_9$) is a second feature point in the phase map $\Delta\phi_{S1}$, and O($x_9,y_9$) is a second feature point in the phase map $\Delta\phi_{S2}$. N($x_9,y_9$) and O ($x_9,y_9$) have the same coordinate values, that is, N($x_9,y_9$) has the same relative position in the phase map $\Delta\phi_{S1}$ as O ($x_9,y_9$) in the phase map $\Delta\phi_{S2}$.

Equations (11) and (12) constitute the mathematical model for six-degree-of-freedom displacement measurement. Due to the redundant information in the above geometric models, multiple different mathematical models may be generated, and the above model is only one of them.

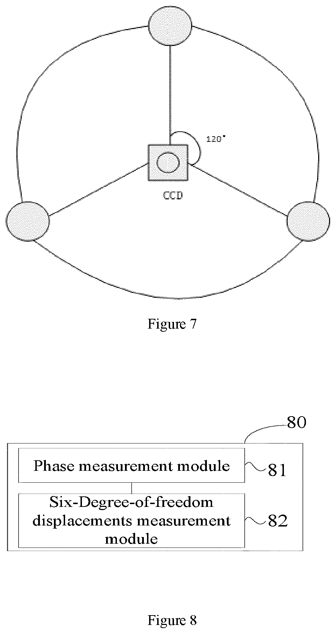

Figure 7 shows a schematic diagram of another spatial distribution of the three lasers in Figures 2/3 of the present disclosed embodiment. As shown in Figure 7, the pairwise angle between the three lasers is 120°. According to the spatial distribution shown in Figure 7, the phase difference output by the three interference paths can be transformed from equation (8) to:

$$\begin{pmatrix} \Delta\phi_{S1} \\ \Delta\phi_{S2} \\ \Delta\phi_{S3} \end{pmatrix} = \frac{\pi}{\lambda}\begin{pmatrix} \sqrt{3}\sin\alpha L_x+\sin\alpha L_y+2(1+\cos\alpha)L_z+2(1+\cos\alpha)yR_x-2(1+\cos\alpha)xR_y+\sin\alpha xR_z-\sqrt{3}\sin\alpha yR_z \\ 2(1+\cos\alpha)L_z-\sqrt{3}\sin\alpha L_x-\sin\alpha L_y+2(1+\cos\alpha)yR_x-2(1+\cos\alpha)xR_y-\sin\alpha xR_z+\sqrt{3}\sin\alpha yR_z \\ 2\sin\alpha L_y+2(1+\cos\alpha)L_z-2(1+\cos\alpha)xR_y+2(1+\cos\alpha)yR_x+2\sin\alpha xR_z \end{pmatrix}$$

$$(13)$$

Derive the phase difference of the three interference paths in equation (13) from *x* and *y*, and equation (9) can be converted into:

$$\begin{pmatrix} \dfrac{\partial\Delta\phi_{S1}}{\partial x} & \dfrac{\partial\Delta\phi_{S1}}{\partial y} \\ \dfrac{\partial\Delta\phi_{S2}}{\partial x} & \dfrac{\partial\Delta\phi_{S2}}{\partial y} \\ \dfrac{\partial\Delta\phi_{S3}}{\partial x} & \dfrac{\partial\Delta\phi_{S3}}{\partial y} \end{pmatrix} = \frac{\pi}{\lambda}\begin{pmatrix} -2(1+\cos\alpha)R_y+\sin\alpha R_z & 2(1+\cos\alpha)R_x-\sqrt{3}\sin\alpha R_z \\ -2(1+\cos\alpha)R_y-\sin\alpha R_z & 2(1+\cos\alpha)R_x+\sqrt{3}\sin\alpha R_z \\ -2(1+\cos\alpha)R_y+2\sin\alpha R_z & 2(1+\cos\alpha)R_x \end{pmatrix}$$

$$(14)$$

By solving equation (14), the three angular displacements can be calculated using the equation:

$$
\left\{
\begin{aligned}
R_x &= \frac{\lambda}{2\pi\left(1+\cos\alpha\right)} \cdot \frac{\partial \Delta\phi_{S3}}{\partial y} \\
R_y &= \frac{\lambda}{4\pi\left(1+\cos\alpha\right)}\left(\frac{\partial \Delta\phi_{S1}}{\partial x} + \frac{\partial \Delta\phi_{S2}}{\partial x}\right). \\
R_z &= \frac{\lambda}{3\pi\sin\alpha}\left(\frac{\partial \Delta\phi_{S3}}{\partial x} - \frac{\partial \Delta\phi_{S2}}{\partial x}\right)
\end{aligned}
\right. \qquad (15)
$$

Similarly, by determining at least two first feature points in each phase map and using differential operations instead of differential operations, the three angular displacements can be determined following the calculation expressed by:

$$
\begin{pmatrix} R_x \\ R_y \\ R_z \end{pmatrix} = \frac{\pi}{\lambda}
\begin{pmatrix}
\dfrac{\Delta\phi_{S3}\left(x_1,y_1\right)-\Delta\phi_{S3}\left(x_2,y_2\right)}{2\left(1+\cos\alpha\right)\left(y_1-y_2\right)} \\[2mm]
\dfrac{\Delta\phi_{S1}\left(x_3,y_3\right)-\Delta\phi_{S1}\left(x_4,y_4\right)+\Delta\phi_{S2}\left(x_3,y_3\right)-\Delta\phi_{S2}\left(x_4,y_4\right)}{4\left(1+\cos\alpha\right)\left(x_3-x_4\right)} \\[2mm]
\dfrac{\Delta\phi_{S3}\left(x_5,y_5\right)-\Delta\phi_{S3}\left(x_6,y_6\right)-\Delta\phi_{S2}\left(x_5,y_5\right)+\Delta\phi_{S2}\left(x_6,y_6\right)}{3\sin\alpha\left(x_5-x_6\right)}
\end{pmatrix}, \qquad (16)
$$

where A'($x_1,y_1$) and B'($x_2,y_2$) are the two first feature points in the phase map $\Delta\phi_{S3}$; C'($x_3,y_3$) and D'($x_4,y_4$) are the two first feature points in the phase map $\Delta\phi_{S1}$; E' ($x_3,y_3$) and F' ($x_4,y_4$) are the two first feature points in the phase map $\Delta\phi_{S2}$; G' ($x_5,y_5$) and H' ($x_6,y_6$) are the two first feature points in the phase map $\Delta\phi_{S3}$; I' ($x_5,y_5$) and J' ($x_6,y_6$) are the two first feature points in the phase map $\Delta\phi_{S2}$.

Similarly, in each phase map, at least one second feature point is determined. Based on the three angular displacements shown in equation (16), combined equations (13) with (16), the three linear displacements can be determined following the calculation expressed by:

$$
\begin{pmatrix} L_x \\ L_y \\ L_z \end{pmatrix} =
\begin{pmatrix}
\dfrac{\sqrt{3}\lambda\left[3\Delta\phi_{S1}\left(x_7,y_7\right)-2\Delta\phi_{S3}\left(x_7,y_7\right)-\Delta\phi_{S2}\left(x_7,y_7\right)\right]}{12\pi\sin\alpha} + y_7 R_z \\[2mm]
\dfrac{\lambda\left[2\Delta\phi_{S3}\left(x_8,y_8\right)-\Delta\phi_{S1}\left(x_8,y_8\right)-\Delta\phi_{S2}\left(x_8,y_8\right)\right]}{4\pi\sin\alpha} - x_8 R_z \\[2mm]
\dfrac{\lambda\left[\Delta\phi_{S1}\left(x_9,y_9\right)+\Delta\phi_{S2}\left(x_9,y_9\right)\right]}{4\pi\left(1+\cos\alpha\right)} - y_9 R_x + y_9 R_y
\end{pmatrix}, \qquad (17)
$$

where K' ($x_7,y_7$) is a second feature point in the phase map $\Delta\phi_{S1}$, L'($x_7,y_7$) is a second feature point in the phase map $\Delta\phi_{S3}$, and M' ($x_7,y_7$) is a second feature point in the phase map $\Delta\phi_{S2}$; N'($x_8,y_8$) is a second feature point in the phase map $\Delta\phi_{S3}$, O'($x_8,y_8$) is a second feature point in the phase map $\Delta\phi_{S1}$, and P' ($x_8,y_8$) is a second feature point in the phase map $\Delta\phi_{S2}$; Q'($x_9,y_9$) is a second feature point in the phase map $\Delta\phi_{S1}$, and R' ($x_9,y_9$) is a second feature point in the phase map $\Delta\phi_{S2}$.

Equations (16) and (17) form another mathematical model for six-degree-of-freedom displacements measurement.

In addition to equations (11) and (12), as well as the two mathematical models for six-degree-of-freedom displacements measurement composed of equations (16) and (17), various different mathematical models can also be obtained according to actual situations. This disclosure does not specify the specific form of mathematical models.

In one possible implementation, for any phase map, the distance between different first feature points determined in the phase map is greater than the first distance threshold; And/or, for any phase map, the distance between different second feature points determined in the phase map is greater than the second distance threshold.

The selection strategy of feature points also has an impact on measurement errors. When selecting feature points that are far apart, it can play a smoothing role, that is, suppress the influence of phase noise and errors. Therefore, for any phase map, the distance between different first feature points determined in the phase map is greater than the first distance threshold, and/or the distance between different second feature points determined in the phase map is greater than the second distance threshold.

Among them, the specific values of the first distance threshold and the second distance threshold can be determined according to the actual situation, and this disclosure does not provide specific limitations on this.

From the above mathematical model, it can be seen that the six-degree-of-freedom displacements are linearly related to the phases of digital speckle pattern interferometry, and its measurement resolution mainly depends on the resolution of phase measurement. In digital speckle pattern interferometry measurement, the phase measurement resolution can usually reach $\pi$/10, and the optimal resolution can reach $\pi$/25 . In general, for example, with a phase resolution of $\pi$/10, a laser wavelength of 532 nm, and an illumination angle of 20°, two measurement points symmetrical about the origin and with a distance of 100 mm are selected for analysis. Based on the first six-degree-of-freedom displacements measurement mathematical model composed of equations (11) and (12), theoretically, the measurement resolutions of $L_x$, $L_y$, $L_z$, $R_x$, $R_y$, and $R_z$ can reach 39 nm, 78 nm, 7 nm, 0.14 $\mu$rad, 0.14 $\mu$rad, and 0.39 $\mu$rad, respectively. This measurement resolution is better than that of the six-degree-of-freedom displacements measurement methods in related technologies. By using shorter wavelength laser sources, increasing illumination angles, expanding the measurement field of view, and improving phase measurement capabilities, the measurement resolution can continue to be improved and optimized. For example, in an ideal situation, the resolution of the six-degrees-of-freedom displacements measurement mentioned above can reach 6.6 nm, 13.2 nm, 2.7 nm, 0.03 $\mu$rad, 0.03 $\mu$rad, and 0.03 $\mu$rad, respectively. The digital speckle pattern interferometry system can accurately measure the six-degrees-of-freedom displacements of an object. When the displacement is large, segmented measurement can be achieved by increasing the sampling rate, which can consider the large displacement as the accumulation of small displacements.

Figure 8 shows a block diagram of a six-degree-of-freedom displacements measurement device of the present disclosed embodiment. As shown in Figure 8, the six-degree-of-freedom displacement measurement device 80 includes:

Phase measurement module 81, used for measuring three phase maps caused by geometric motions and/or deformations of the measured object based on the three-dimensional digital speckle pattern interferometry;
Six-degree-of-freedom displacement measurement module 82 is used to determine the six-degree-of-freedom displacements of the measured object based on the three phase maps, wherein the six-degree-of-freedom displacements include three linear displacements and three angular displacements.

In one possible implementation, the six-degree-of-freedom displacement measurement module 82 includes:

A spatial gradient determination submodule that is used to determine the spatial gradient corresponding to each phase map;
An Angular displacement measurement submodule that is used to determine the three angular displacements based on the spatial gradient corresponding to each phase map.

In one possible implementation, the angular displacement measurement submodule is specifically used for:

Determine at least two first feature points in each phase map;
Based on the two first feature points determined in each phase map, as well as the spatial gradient and distribution characteristics corresponding to each phase map, determine the three angular displacements.

In one possible implementation, a six-degree-of-freedom displacement measurement module includes a linear displacement measurement submodule, specifically used for:

Determine at least one second feature point in each phase map;
Determine the three linear displacements based on the second feature point determined in each phase map, the three angular displacements, and the three phase maps.

In one possible implementation, for any phase map, the distance between different first feature points determined in the phase map is greater than the first distance threshold; And/or,

For any phase map, the distance between different second feature points determined in the phase map is greater than the second distance threshold
It should be noted that although Figure 1-7 is used as an example to introduce the six-degree-of-freedom displacement measurement method disclosed herein, those technicians in this field can understand that this disclosure should not be limited to this. In fact, users can flexibly set the measurement optical setup and various parameters according to their personal preferences and/or actual application scenarios.

In this way, based on the three-dimensional digital speckle pattern interferometry, the three phase maps caused by the geometric motion and/or deformation of the measured object can be measured, so that the six-degree-of-freedom displacements of the measured object can be determined based on the three phase maps. The six-degree-of-freedom displacements include the three linear displacements and three angular displacements. In this way, based on the three-dimensional digital speckle pattern interferometry, it is possible to effectively achieve cooperative-target-mirror-free measurement of the measured object, and the accuracy of the measured six-degree-of-freedom displacements are relatively high.

In some embodiments, the functions or modules included in the device provided in this disclosed embodiment can be used to execute the methods described in the abovementioned method embodiments. The specific implementation can refer to the description of the above method embodiments. For simplicity, it will not be repeated here.

This disclosed embodiment also proposes a computer-readable storage medium on which computer program instructions are stored, and the above method is implemented when the computer program instructions are executed by the processor. Computer readable storage media can be either volatile or non-volatile.

This disclosed embodiment further proposes an electronic device comprising: a processor; Memory used to store processor executable instructions; Among them, the processor is configured to implement the above method when executing instructions stored in the memory.

This disclosed embodiment also provides a computer program product comprising computer-readable code, or a non-volatile computer-readable storage medium carrying computer-readable code. When the computer-readable code runs in a processor of an electronic device, the processor in the electronic device executes the above method.

The above has described the various embodiments disclosed herein. The above explanation is illustrative and not exhaustive, and is not limited to the disclosed embodiments. Many modifications and changes are obvious to ordinary technical personnel in this field, without deviating from the scope and spirit of the described embodiments. The selection of terms used in this article aims to best explain the principles, practical applications, or technological improvements in the market of each embodiment, or to enable other ordinary technical personnel in the art to understand the disclosed embodiments.

## Claims

1. A six-degree-of-freedom displacements measurement method, **characterized in that** it comprises:

   Based on three-dimensional digital speckle pattern interferometry, measure the three phase maps caused by the geometric motions and/or deformations of the measured object;
   Based on the three phase maps, determine the six-degree-of-freedom displacements of the measured object, wherein the six-degree-of-freedom displacements include three linear displacements and three angular displacements.

2. The method according to claim 1, **characterized in that**, based on the three phase maps, the six-degree-of-freedom displacements of the measured object are determined, including:

   Determine the spatial gradient corresponding to each phase map;
   Determine the three angular displacements based on the spatial gradient corresponding to each phase map.

3. The method according to claim 2, **characterized in that** the three angular displacements are determined based on the spatial gradient corresponding to each phase map, including:

   Determine at least two first feature points in each phase map;
   Determine the three angular displacements based on the two first feature points determined in each phase map, as well as the spatial gradient and distribution characteristics corresponding to each phase map.

4. The method according to claim 2 or 3, **characterized in that** the six-degree-of-freedom displacements of the measured object is determined based on the three phase maps, including:

   Determine at least one second feature point in each phase map;

Determine the three linear displacements based on the second feature point determined in each phase map, the three angular displacements, and the three phase maps.

5. The method according to claim 3 or 4, **characterized in that** for any of the phase maps, the distance between different first feature points determined in the phase map is greater than the first distance threshold; And/or,
For any phase map, the distance between different second feature points determined in the phase map is greater than the second distance threshold.

6. A six-degree-of-freedom displacements measurement device, **characterized in that** it comprises:

A phase measurement module, used for measuring three phase maps caused by geometric motions and/or deformations of the measured object based on three-dimensional digital speckle pattern interferometry;
A six-degree-of-freedom displacements measurement module is used to determine the six-degree-of-freedom displacements of the measured object based on the three phase maps, wherein the six-degree-of-freedom displacements include three linear displacements and three angular displacements.

7. The device according to claim 6, **characterized in that** the six-degree-of-freedom displacements measurement module comprises:

A spatial gradient determination submodule that is used to determine the spatial gradient corresponding to each phase map;
An angular displacement measurement submodule that is used to determine the three angular displacements based on the spatial gradient corresponding to each phase map.

8. The device according to claim 7, **characterized in that** the angular displacement measurement submodule is specifically used for:

Determine at least two first feature points in each phase map;
Determine the three angular displacements based on the two first feature points determined in each phase map, as well as the spatial gradient and distribution characteristics corresponding to each phase map.

9. The device according to claim 7 or 8, **characterized in that** the six-degree-of-freedom displacement measurement module comprises a linear displacement measurement submodule, specifically for:

Determine at least one second feature point in each phase map;
Determine the three linear displacements based on the second feature point determined in each phase map, the three angular displacements, and the three phase maps.

10. The method according to claim 8 or 9, **characterized in that** for any of the phase maps, the distance between different first feature points determined in the phase map is greater than the first distance threshold; And/or,
For any of the phase map, the distance between different second feature points determined in the phase map is greater than the second distance threshold.

Based on the three-dimensional digital speckle pattern interferometry, measure the three phase maps caused by the geometric motions and/or deformations of the measured object — S11

Based on the three phase maps, determine the six-degree-of-freedom displacements of the measured object, where the six-degree-of-freedom displacements includes three linear displacements and three angular displacements — S12

Figure 1

Figure 2

Figure 3

Figure 4

Figure 5

Figure 6

Figure 7

80

Phase measurement module ～81

Six-Degree-of-freedom
displacements measurement
module ～82

Figure 8

## INTERNATIONAL SEARCH REPORT

International application No.

**PCT/CN2022/103733**

**A.    CLASSIFICATION OF SUBJECT MATTER**

G01B 11/16(2006.01)i;  G01B 11/02(2006.01)i;  G01B 11/26(2006.01)i

According to International Patent Classification (IPC) or to both national classification and IPC

**B.    FIELDS SEARCHED**

Minimum documentation searched (classification system followed by classification symbols)

G01B

Documentation searched other than minimum documentation to the extent that such documents are included in the fields searched

Electronic data base consulted during the international search (name of data base and, where practicable, search terms used)

CNPAT, EPODOC, WPI, CNKI: 六自由度, 位移, 线位移, 角位移, 平动位移, 转动位移, 俯仰角, 偏航角, 滚转角, 数字散斑, 三维, 相位图, 相位分布, 空间梯度; 6 w DOF, displacement, linear w displacement, speckle 1d interfere+, roll w angle, phase w distribution, yaw, pitch, slope, 3 w dimensional

**C.    DOCUMENTS CONSIDERED TO BE RELEVANT**

| Category* | Citation of document, with indication, where appropriate, of the relevant passages | Relevant to claim No. |
|---|---|---|
| Y | CN 103148798 A (NANJING UNIVERSITY OF AERONAUTICS AND ASTRONAUTICS) 12 June 2013 (2013-06-12) description, paragraphs [0014]-[0029], and figure 1 | 1-10 |
| Y | CN 105973169 A (BEIJING INFORMATION SCIENCE & TECHNOLOGY UNIVERSITY) 28 September 2016 (2016-09-28) description, paragraphs [0029]-[0077], and figures 1-5 | 1-10 |
| Y | CN 110006367 A (BEIJING INFORMATION SCIENCE & TECHNOLOGY UNIVERSITY) 12 July 2019 (2019-07-12) description, paragraphs [0061]-[0158], and figures 1-7 | 1-10 |
| A | CN 102589448 A (BEIJING INFORMATION SCIENCE & TECHNOLOGY UNIVERSITY) 18 July 2012 (2012-07-18) entire document | 1-10 |
| A | CN 108106556 A (SHANGHAI JIAO TONG UNIVERSITY) 01 June 2018 (2018-06-01) entire document | 1-10 |

☑ Further documents are listed in the continuation of Box C.          ☑ See patent family annex.

| | | |
|---|---|---|
| *    Special categories of cited documents: | "T" | later document published after the international filing date or priority date and not in conflict with the application but cited to understand the principle or theory underlying the invention |
| "A"    document defining the general state of the art which is not considered to be of particular relevance | | |
| "E"    earlier application or patent but published on or after the international filing date | "X" | document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"    document referring to an oral disclosure, use, exhibition or other means | | |
| "P"    document published prior to the international filing date but later than the priority date claimed | "&" | document member of the same patent family |

| Date of the actual completion of the international search | Date of mailing of the international search report |
|---|---|
| **05 December 2022** | **21 December 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/103733**

**C.  DOCUMENTS CONSIDERED TO BE RELEVANT**

| Category* | Citation of document, with indication, where appropriate, of the relevant passages | Relevant to claim No. |
|---|---|---|
| A | CN 105093893 A (BEIJING INFORMATION SCIENCE & TECHNOLOGY UNIVERSITY) 25 November 2015 (2015-11-25) entire document | 1-10 |
| A | US 2018328713 A1 (OPTONOR AS.) 15 November 2018 (2018-11-15) entire document | 1-10 |
| A | 袁腾飞 等 (YUAN, Tengfei et al.). "全光纤数字散斑干涉面内变形内窥测量 (Endoscopic Measurement of In-plane Deformation Using All-fiber Digital Speckle Pattern Interferometry)" 北京信息科技大学学报(自然科学版) (*Journal of Beijing Information Science & Technology University (Vol. Sciences)*), Vol. 5, No. 35, 31 October 2020 (2020-10-31), ISSN: 1674-6864, pp. 35-42 | 1-10 |

Form PCT/ISA/210 (second sheet) (January 2015)

**INTERNATIONAL SEARCH REPORT**
**Information on patent family members**

International application No.

**PCT/CN2022/103733**

| Patent document cited in search report | | | Publication date (day/month/year) | Patent family member(s) | | | Publication date (day/month/year) |
|---|---|---|---|---|---|---|---|
| CN | 103148798 | A | 12 June 2013 | CN | 103148798 | B | 20 May 2015 |
| CN | 105973169 | A | 28 September 2016 | CN | 105973169 | B | 11 September 2018 |
| CN | 110006367 | A | 12 July 2019 | CN | 110006367 | B | 13 August 2021 |
| CN | 102589448 | A | 18 July 2012 | CN | 102589448 | B | 25 February 2015 |
| CN | 108106556 | A | 01 June 2018 | CN | 108106556 | B | 21 January 2020 |
| CN | 105093893 | A | 25 November 2015 | CN | 105093893 | B | 29 September 2017 |
| US | 2018328713 | A1 | 15 November 2018 | EP | 3377848 | A1 | 26 September 2018 |
| | | | | WO | 2017085457 | A1 | 26 May 2017 |
| | | | | US | 10466032 | B2 | 05 November 2019 |
| | | | | EP | 3377848 | B1 | 02 October 2019 |
| | | | | GB | 2544727 | A | 31 May 2017 |

Form PCT/ISA/210 (patent family annex) (January 2015)